# EUROPÄISCHE PATENTSCHRIFT

(11) **EP 1 006 043 B1**
(45) Veröffentlichungstag und Bekanntmachung des Hinweises auf die Patenterteilung: **18.02.2004**
(21) Anmeldenummer: 99122536.8
(22) Anmeldetag: 12.11.1999
(51) Int. Cl.: B62D 7/18, B60T 1/06

(54) **Achselement-und-Bremssattel-System einer Kraftfahrzeugachse sowie Verfahren zu deren Herstellung**
System of an axle element and caliper of a motor vehicle as well as method of making the same
Systeme d'un elément d'essieu et d'un etrier de frein d'un véhicule automobile et son procédé de production

(30) Priorität: 03.12.1998 DE 19855789
(43) Veröffentlichungstag der Anmeldung: 07.06.2000
(73) Patentinhaber: Volkswagen Aktiengesellschaft, 38436 Wolfsburg (DE)
(72) Erfinder: Schultz, Werner, 38446 Wolfsburg (DE); Kübler, Ulf, 38440 Wolfsburg (DE)

(56) Entgegenhaltungen:
- DE-U- 29 705 646

## Beschreibung

Die Erfindung betrifft ein System mit Achselement einer Kraftfahrzeugachse, insbesondere Schwenklager oder Schräglenker, zur Befestigung eines Bremssattels einer Sattelbremse mit wenigstens einem Flansch, der eine Bohrung für die Befestigung des Bremssattels aufweist. Ferner betrifft die Erfindung Verfahren zur Herstellung derartiger Achselemente, nach dem Oberbegriff der Ansprüche 3 und 6.

Derartige Achselement-und-Bremssattel-Systeme sind aus der Praxis bekannt. Ein Achselement-und-Bremssattel-System der eingangs genannten Art ist beispielsweise in der DE 297 05 646 U1 beschrieben, bei der ein zusätzlicher Adapter zur Anpassung unterschiedlicher Bremssattelgrößen vorgesehen ist. Achselemente in Form von Schwenklagern werden bei gelenkten Achsen (Vorderachsen) verwendet. Achselemente in Form von Schräglenkern kommen bei nicht-gelenkten Achsen (Hinterachsen) zum Einsatz. Sie dienen neben der Befestigung des Bremssattels der Sattelbremse üblicherweise auch zur Aufnahme eines Radlagers. Je nach Größe des zu befestigenden Rades bzw. des Bremsscheibendurchmessers werden unterschiedliche Bremssattelgrößen verwendet. Dementsprechend sind je nach Größe des Bremssattels, also Bremsscheibendurchmesser, unterschiedliche Achselemente vorgesehen, obwohl die Achselemente ansonsten ähnlich gestaltet sind. Es müssen also für die Montage für unterschiedliche Bremsscheibendurchmesser unterschiedliche Achselemente vorgesehen werden, was die Lagerhaltung erhöht.

Hiervon ausgehend liegt der Erfindung das Problem zugrunde, ein system der eingangs genannten Art derart weiterzubilden, daß an dem Achselement Bremssättel für unterschiedliche Bremsscheibendurchmesser angebracht werden können.

Dieses Problem wird erfindungsgemäß durch die Meßnahmen der System - bzw. Verfahrensansprüche gelöst.

Durch die erfindungsgemäße Gestaltung kann für unterschiedliche Bremssattelgrößen immer derselbe Achselementrohling vorgesehen werden. Der Flansch des Rohlings wird je nach anzubringender Bremssattelgröße bzw. Bremssattelgrößen mit einer oder mehreren Bohrungen versehen.

Nach einer ersten Ausführungsform der Erfindung werden in den Flansch mehrere Bohrungen, nämlich jeweils eine Bohrung für eine Bremssattelgröße, angebracht. Derartige Achselemente können dezentral gelagert werden und ohne Rücksicht auf die jeweilige Bremssattelgröße für die Montage entnommen werden.

Nach einer weiteren bevorzugten Ausführungsform weist der Flansch des Achselements jedoch immer nur eine Bohrung auf, die jeweils gezielt für die vorgesehene Bremssattelgröße gebohrt wird. Der Bremssattelrohling wird also gezielt auf Anforderung der Montage mit der entsprechenden Bohrung versehen und unmittelbar an die Montage übergeben. Diese Ausführungsform hat den Vorteil, daß weniger Zerspanungsarbeit aufzubringen ist. Aufgrund der modernen CNC-Maschinen ist eine entsprechende Steuerung des Bohrwerkzeugs ohne weiteres möglich.

Nach einer Weiterbildung der Erfindung kann der Flansch ohrenartig an das Achselement angeformt sein. Dieses empfiehlt sich insbesondere dann, wenn der an dem Achselement bisher verwendete Flansch nicht genügend Raum aufweist, um alle Bremssattelgrößen abzudecken. Hierdurch können durch einfache konstruktive Änderungen bisherige Achselemente so umkonstruiert werden, daß sie in Verbindung mit der Erfindung eingesetzt werden können.

Die Erfindung wird nachfolgend anhand von in den Zeichnungen dargestellten Ausführungsbeispielen näher erläutert. In diesen zeigen:
- Fig. 1: eine erste Ausführungsform eines Achselements mit den Erfindungsmerkmalen,
- Fig. 2: eine weitere Ausführungsform eines Achselements mit den Erfindungsmerkmalen.

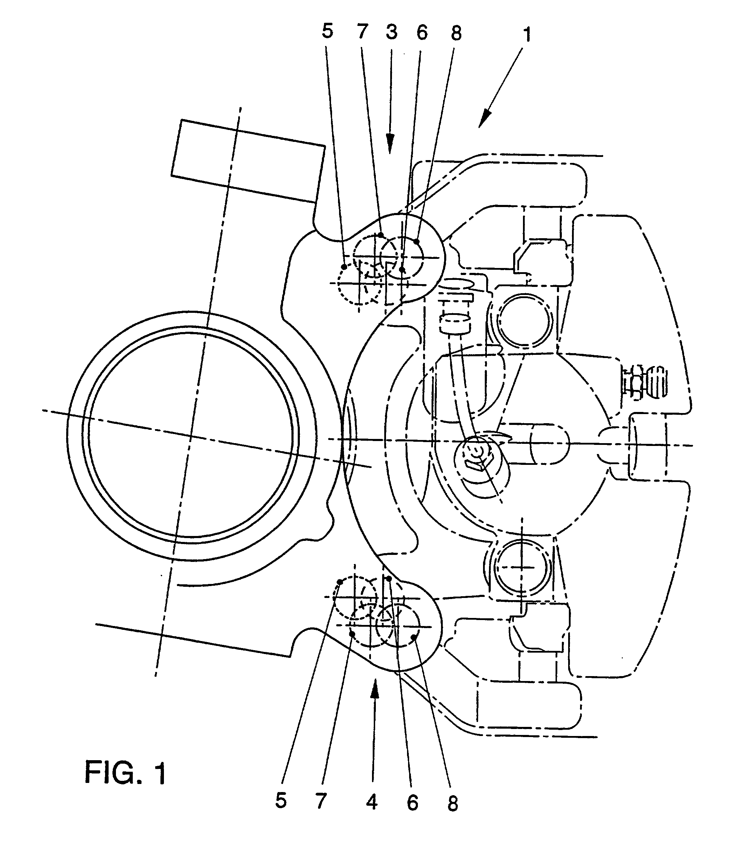

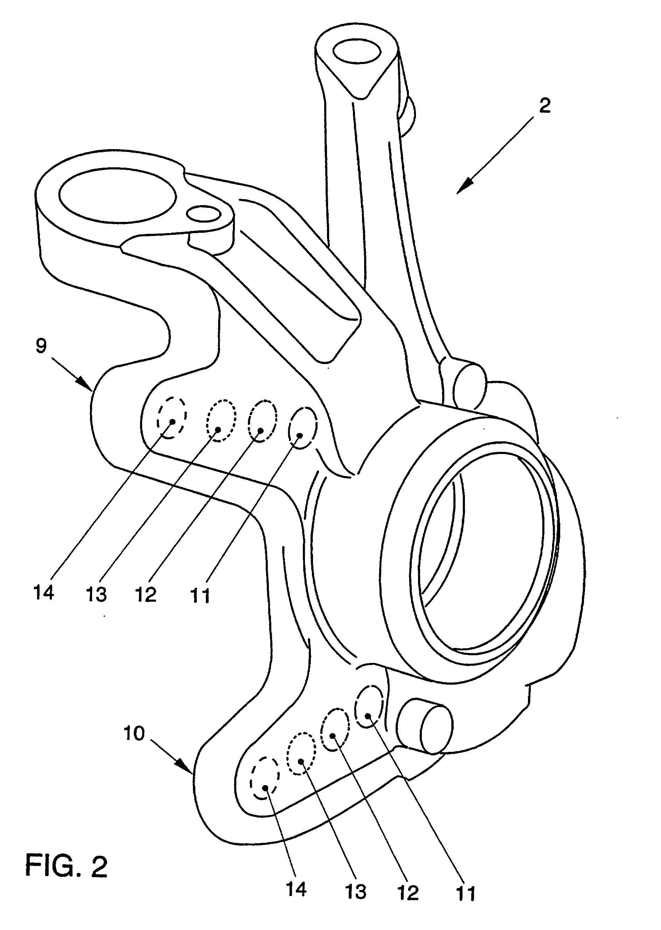

Fig. 1 zeigt ein Achselement für eine Vorderachse, nämlich ein Schwenklager 1. Fig. 2 zeigt ein Achselement für eine Hinterachse, nämlich einen Schräglenker 2.

Das Schwenklager 1 weist zwei Flansche 3 und 4 auf. Diese Flansche 3 und 4 sind so bemessen, daß in ihnen unterschiedliche Bohrungen zur Befestigung unterschiedlicher Bremssattelgrößen gebohrt werden können. Im vorliegenden Fall können konkret vier Bohrungen für vier unterschiedliche Bremssattelgrößen vorgesehen werden. So kann je nach Bedarf entweder eine Bohrung 5 für 15"-, eine Bohrung 6 für 16''-, eine Bohrung 7 für 17"- und eine Bohrung 8 für 18"-Bremssättel gebohrt werden. Wie in Fig. 1 erkennbar, weisen die Bohrungen 5..8 Überdeckungen auf. Es wird daher immer nur eine der Bohrungen 5..8 gebohrt. Die jeweilige Bohrung 5..8 wird daher jeweils unmittelbar vor der Montage auf konkrete Anforderung je nach vorgesehener Bremssattelgröße gebohrt. Dieses kann in einer entsprechenden Zuführlinie durch ein geeignetes CNC-Werkzeug erfolgen.

An dem Schräglenker 2 gemäß Fig. 2 sind wiederum zwei Flansche 9 und 10 zur Befestigung von Bremssätteln vorgesehen. Die Flansche 9 und 10 sind ohrenartig an dem Schräglenker 2 angeformt. Sie weisen jeweils vier Bohrungen 11, 12, 13, 14 für unterschiedliche Bremssattelgrößen auf. Die Bohrungen 11 sind dabei für 15"-Bremssättel, die Bohrung 12 für 16''-Bremssättel, die Bohrung 13 für 17"-Bremssättel und die Bohrung 14 für 18"-Bremssättel vorgesehen. Da die Bohrungen 11..14 keine Überdeckung aufweisen, können alle vier Bohrungen 11..14 nebeneinander vorgesehen werden. Die Bohrungen 11..14 werden dabei beispielsweise in einem Arbeitsgang mit einem Bohrwerkzeug gebohrt werden, das je eine Spindel für jede Bohrung 11..14 aufweist. Alternativ kann aber auch hier jeweils nur die konkret benötigte Bohrung 11..14, wie in Verbindung mit dem Schwenklager gemäß Fig. 1 beschrieben, gebohrt werden.

In Abweichung von den gezeigten Ausführungsbeispielen kann das Schwenklager 1 auch so ausgebildet sein, daß in dem Flansch mehrere Bohrungen gleichzeitig nebeneinander gebohrt werden können. Entsprechend können die Flansche 9 und 10 des Schräglenkers 2 so dimensioniert sein, daß die unterschiedlichen Bohrungen überdeckend anzuordnen wären, wie dies in Verbindung mit Fig. 1 beschrieben ist.

### BEZUGSZEICHENLISTE

- 1: Schwenklager
- 2: Schräglenker
- 3: Flansch
- 4: Flansch
- 5: Bohrung
- 6: Bohrung
- 7: Bohrung
- 8: Bohrung
- 9: Flansch
- 10: Flansch
- 11: Bohrung
- 12: Bohrung
- 13: Bohrung
- 14: Bohrung

## Patentansprüche

1. Achselement-und-Bremssattel-System einer Kraftfahrzeugachse, wobei das Achselemen insbesondere Schwenklager (1) oder Schräglenker (2), mit wenigstens einem Flansch (9, 10) versehen ist, der eine Bohrung (11) für die Befestigung eines Bremssattels aus einer Reihe von Bremssätteln unterschiedlicher Größe aufweist,
**dadurch gekennzeichnet,**
- **daß** der Flansch (9, 10) mit mindestens einer weiteren Bohrung (12 oder 13 oder 14) versehen ist, über die ein Bremssattel anderer Größe aus dieser Reihe von Bremssätteln unmittelbar am Achselement befestigbar ist.

2. Achselement-und-Bremssattel-System nach Anspruch 1,
**dadurch gekennzeichnet,**
- **daß** der Flansch (9, 10) ohrenartig angeformt ist.

3. Verfahren zur Herstellung eines Achselement-und-Bremssattel-Systems nach Anspruch 1 oder 2,
**dadurch gekennzeichnet,**
- **daß** unterschiedliche Bohrungen (11, 12, 13, 14) für verschiedene Bremssattelgrößen gleichzeitig gebohrt werden.

4. Achselement-und-Bremssattel-System für eine Kraftfahrzeugachse, bei dem ein Bremssattel an einem Achselement (1) befestigt ist, wobei das System folgende Systemelemente umfaßt:
- ein Achselement (1); und
- mehrere Bremssättel unterschiedlicher Größe zur jeweiligen unmittelbaren Befestigung an einem Achselement (1) über eine an wenigstens einem Flansch desselben vorgesehene Bohrung (5 oder 6 oder 7 oder 8);
wobei der wenigstens eine Flansch (3) derart bemessen ist, um die Positionen von unterschiedlichen Bohrungen für die Befestigung von Bremssätteln unterschiedlicher Größe abzudecken; und
wobei für den ausgewählten Bremssattel an dem Flansch (3) eine Bohrung (5 oder 6 oder 7 oder 8 oder) vorgesehen ist.

5. Achselement-und-Bremssattel-Anordnung nach Anspruch 4, **dadurch gekennzeichnet, daß** der Flansch (3) ohrenartig angeformt ist.

6. Verfahren zur Herstellung eines Achselement-und-Bremssattel-Systems einer Kraftfahrzeugache, wobei ein Achselement insbesondere Schwenklager (1) oder Schräglenker (2) wenigstens mit einem Flansch (9, 10) versehen wird, an welchem eine Bohrung in einer Position für die Befestigung eines Bremssattels aus einer Reihe von Bremssätteln unterschiedlicher Größe vorgesehen wird,
**dadurch gekennzeichnet,**
- **daß** der Flansch derart bemessen wird, daß die Positionen von unterschiedlichen Bohrungen zur Befestigung eines Bremssattels aus der Reihe von Bremssätteln unterschiedlicher Größe abgedeckt werden, und
- **daß** unmittelbar vor der Montage eines am Achselement unmittelbar zu befestigenden ausgewählten Bremssattels aus der Reihe von Bremssätteln unterschiedlicher Größe am Flansch die für die Größe des ausgewählten Bremssattels konkret benötigte Bohrung (5 oder 6 oder 7 oder 8) gebohrt wird.

## Claims

1. Axle element and brake caliper system of a motor vehicle axle, the axle element, in particular a swivel bearing (1) or oblique link (2), being provided with at least one flange (9, 10) which has a hole (11) for the fastening of one brake caliper from a series of brake calipers of different size, **characterized**
- **in that** the flange (9, 10) is provided with at least one further hole (12 or 13 or 14) via which a brake caliper of different size from this series of brake calipers can be fastened directly to the axle element.

2. Axle element and brake caliper system according to Claim 1, **characterized**
- **in that** the flange (9, 10) is shaped like an ear.

3. Method for producing an axle element and brake caliper system according to Claim 1 or 2, **characterized**
- **in that** different holes (11, 12, 13, 14) for different sizes of brake caliper are drilled at the same time.

4. Axle element and brake caliper system for a motor vehicle axle, in which a brake caliper is fastened to an axle element (1), the system comprising the following system elements:
- an axle element (1); and
- a plurality of brake calipers of different size for the respective direct fastening to an axle element (1) via a hole (5 or 6 or 7 or 8) provided on at least one flange of the said axle element;
the at least one flange (3) being dimensioned in such a manner in order to cover the positions of different holes for the fastening of brake calipers of different size; and
one hole (5 or 6 or 7 or 8) being provided on the flange (3) for the selected brake caliper.

5. Axle element and brake caliper arrangement according to Claim 4, **characterized in that** the flange (3) is shaped like an ear.

6. Method for producing an axle element and brake caliper system of a motor vehicle axle, an axle element, in particular a swivel bearing (1) or oblique link (2), being provided with at least one flange (9, 10) on which a hole is provided in a position for the fastening of one brake caliper from a series of brake calipers of different size, **characterized**
- **in that** the flange is dimensioned in such a manner that the positions of different holes for the fastening of one brake caliper from the series of brake calipers of different size are covered, and
- **in that**, immediately before the installation of a brake caliper which is selected from the series of brake calipers of different size and is to be fastened directly to the axle element, the hole (5 or 6 or 7 or 8) actually required for the size of the selected brake caliper is drilled on the flange.

## Revendications

1. Système constitué d'un élément d'essieu et d'un étrier de frein d'un essieu de véhicule automobile, dans lequel l'élément d'essieu, notamment un palier pivotant (1) ou un bras oblique (2), est pourvu d'au moins une bride (9, 10), qui présente un alésage (11) pour la fixation d'un étrier de frein provenant d'une série d'étriers de frein de différentes tailles,
**caractérisé en ce que**
- la bride (9, 10) est pourvue d'au moins un autre alésage (12 ou 13 ou 14), par le biais duquel un étrier de frein d'une taille différente de cette série d'étriers de frein peut être fixé directement sur l'élément d'essieu.

2. Système constitué d'un élément d'essieu et d'un étrier de frein selon la revendication 1,
**caractérisé en ce que**
- la bride (9, 10) est formée à la manière d'une oreille.

3. Procédé de fabrication d'un système constitué d'un élément d'essieu et d'un étrier de frein selon la revendication 1 ou 2,
**caractérisé en ce que**
- différents alésages (11, 12, 13, 14) sont percés simultanément pour différentes tailles d'étriers de frein.

4. Système constitué d'un élément d'essieu et d'un étrier de frein pour un essieu de véhicule automobile, dans lequel un étrier de frein est fixé sur un élément d'essieu (1), le système présentant les éléments de système suivants :
- un élément d'essieu (1) ; et
- plusieurs étriers de frein de différentes tailles pour la fixation directe respective sur un élément d'essieu (1) par le biais d'un alésage (5 ou 6 ou 7 ou 8) prévu sur au moins une bride de celui-ci ;
dans lequel l'au moins une bride (3) est dimensionnée de manière à recouvrir les positions de différents alésages pour la fixation d'étriers de frein de différentes tailles ; et
dans lequel on prévoit un alésage (5 ou 6 ou 7 ou 8) pour l'étrier de frein choisi sur la bride (3).

5. Agencement d'élément d'essieu et d'étrier de frein selon la revendication 4,
**caractérisé en ce que**
la bride (3) est formée à la manière d'une oreille.

6. Procédé de fabrication d'un système constitué d'un élément d'essieu et d'un étrier de frein d'un essieu de véhicule automobile, dans lequel un élément d'essieu, notamment un palier pivotant (1) ou un bras oblique (2), est pourvu d'au moins une bride (9, 10), sur laquelle est prévu un alésage dans une position pour la fixation d'un étrier de frein provenant d'une série d'étriers de frein de différentes tailles,
**caractérisé en ce que**
- la bride est dimensionnée de manière à recouvrir les positions de différents alésages pour la fixation d'un étrier de frein provenant de la série d'étriers de frein de différentes tailles, et **en ce que**
- directement avant le montage sur la bride d'un étrier de frein choisi à fixer directement sur l'élément d'essieu, provenant de la série d'étriers de frein de différentes tailles, on perce l'alésage nécessaire concrètement (5 ou 6 ou 7 ou 8) pour la taille de l'étrier de frein choisi.
